# EUROPEAN PATENT SPECIFICATION

(11) **EP 1 995 880 B1**
(45) Date of publication and mention of the grant of the patent: **07.09.2011**
(21) Application number: 07290661.3
(22) Date of filing: 23.05.2007
(51) Int. Cl.: H04B 1/16

(54) **Power management method and corresponding device**
Leistungsverwaltungsverfahren und entsprechende Vorrichtung
Procédé de gestion d'énergie et dispositif correspondant

(43) Date of publication of application: 26.11.2008
(73) Proprietor: Dibcom, 91120 Palaiseau (FR)
(72) Inventor: Sibers, Jean-Philippe, 91120 Palaiseau (FR)
(74) Representative: Blot, Philippe Robert Emile

(56) References cited:
- EP-A- 1 469 606
- EP-A2- 1 328 066
- WO-A-91/19357
- US-A1- 2005 064 829
- US-B1- 6 208 837

## Description

This invention relates to a power management method for radio frequency (RF) receivers and a corresponding receiver.

To maximize usage of the available bandwidth, a number of multiple access technologies have been implemented to allow more than one subscriber to communicate simultaneously in a communication system. These multiple access technologies include for example, time division multiple access (TDMA), frequency division multiple access (FDMA), code division multiple access (CDMA), and coded orthogonal frequency division multiplexing (COFDM). These technologies assign each system subscriber to a specific traffic channel that transmits and receives subscriber voice/data signals via a selected time slot, a selected frequency, a selected unique code, or a combination thereof. The data received during a time slot is called a burst of data.

Typically, radio frequency (RF) receivers comprise components to receive and process every kind of signal. All or some components of an RF receiver can operate in binary modes, i.e., some components such as the RF front-end or the entire base band demodulator, are either in idle or active mode.

One example of a prior art power management method is disclosed in WO 95/19357.

Known power management methods take advantage of the receiver abilities to deactivate the receiver between reception periods, leaving only a monitoring component active in order to detect the reception of a new burst of data. It is also possible to use the energy of the received signal to trigger the powering up of the receiver without the use of a monitoring component.

In the case of digital video broadcasting handheld (DVB-H), the receiver is put in an idle mode between the receptions of two consecutive bursts of data dedicated to the service being selected. The RF receiver therefore activates entirely only upon receipt of the beginning of a burst of data.

It is an object of the invention to provide a device for receiving RF signal having low power consumption.

With the following and other objects in view, the invention features a device for receiving a radio frequency signal as recited in claim 1.

According to the device of the invention, all the processing elements are not activated together at the activation time: some processing elements are activated only at a later time. Until that time they do not consume power, which permits to obtain a low consumption device.

Other advantages of the receiver are recited in the dependant claims.

As recited in claim 7, the invention also features a power management method.

Other features of the method are recited in the dependent claims.

These and other aspects of the dynamic power management method and the corresponding device will be apparent from the following description, claims, and from the drawings in which:
- Figure 1 is a schematic diagram of a RF receiver, according to the present invention;
- Figure 2 is a representation of a part of a DVB-H signal;
- Figure 3 is a graph representing the power consumption of the receiver of figure 1 during reception of the signal of figure 2;
- Figure 4 is a flow chart of a method for power management achieved by the RF receiver of figure 1.

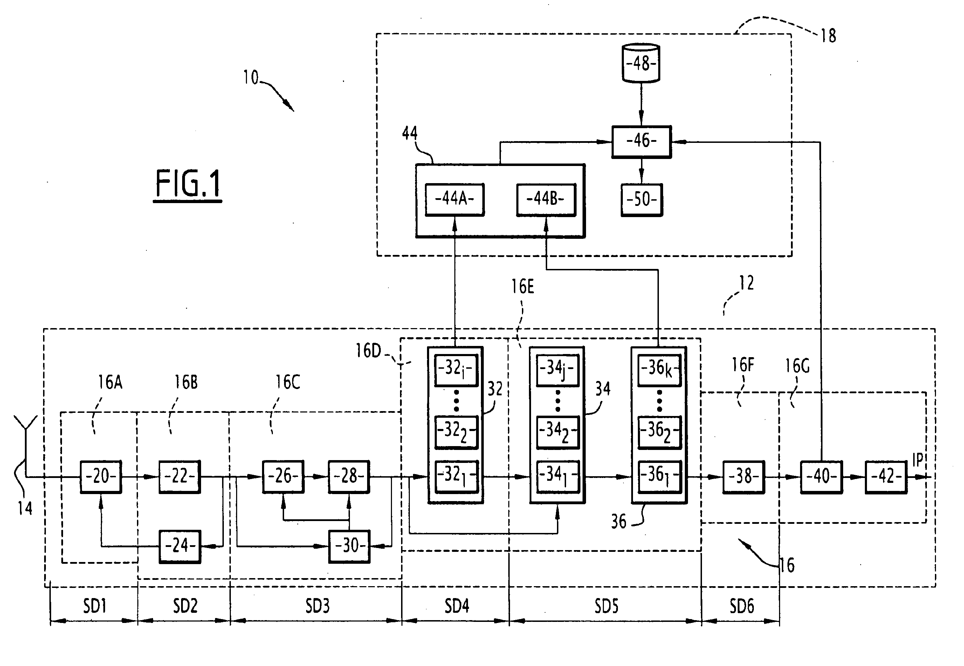

Referring to figure 1, a RF receiver 10 is illustrated. The receiver 10 comprises a demodulating unit 12 connected to an antenna 14 intended to receive an analog RF signal. The demodulating unit 12 comprises a plurality of processing elements, generally referenced by numeral 16, each adapted to achieve a different elementary processing operation

The RF receiver 10 further comprises a power management module 18 for activating/deactivating the processing elements 16.

Depending on the reception quality, the signal must be processed in by a certain number of processing elements 16. More precisely, the amount of processing needed to demodulate the signal increases as the reception quality decreases. When the reception quality is low, the signal must therefore be processed by many processing elements.

Several data paths are thus possible within the demodulating unit 12 between its input and output, depending on the processing elements through which data must be processed.

The processing elements 16 are grouped in functional modules 16A...16G so that the processing elements 16 of a single functional module 16A...16G are all managed at the same time.

In the example described, the processing elements 16 are grouped in seven consecutive functional modules, from input to output: a reception module 16A, a reception control module 16B, a fast Fourier transform (FFT) module 16C, a frequency channel estimation module 16D, a first decoder module 16E, a second decoder module 16F and a demultiplexing module 16G.

In the example, only some processing elements are described, for clarity reason. It will become apparent for the ones skilled in the art that other processing elements may be used in the demodulating unit, without departing from the scope of the invention. Moreover, the functional modules may be defined in another way, i.e. the processing elements may be grouped in another way, still without departing from the scope of the invention.

Accordingly, the reception module 16A comprises a front-end 20 outputting a base band signal.

The reception control module 16B comprises an analog to digital converter 22 and an amplifier gain controller (AGC) 24 for generating a gain signal from the digitized signal in order to control the front end 20.

The FFT module 16C comprises a time and frequency offsets compensator 26 outputting a compensated signal to a FFT processing element 28. The FFT module 16C further comprises a symbol, time and frequency synchronization element 30 for controlling the time and frequency offsets compensator 26 and the FFT processing element 28.

The frequency channel estimation module 16D comprises a frequency channel estimation unit 32 with several processing elements 32ⱼ, among which a channel estimator 32₁ and a first order channel derivate estimator 32₂, both using the frequency signal outputted by the FFT processing element 20B.

The first decoder module 16E comprises an equalization unit 34 with several processing elements 34ⱼ. The equalization unit 34 is intended for equalizing the frequency signal outputted by the FFT processing element 28. The equalization unit 34 is controlled by the processing elements 32ᵢ of the channel estimation module 16D.

The first decoder module 24 further comprises a Viterbi decoder 36 for decoding the equalized signal and outputting a sequence of bits. The Viterbi decoder 36 comprises several processing elements 36ₖ that must be used all or in part depending on the quality of the signal.

The second decoder module 16F comprises a Reed Solomon decoder 38 for generating a byte transport stream from the bit sequence outputted by the Viterbi decoder 36.

The demultiplexing module 16G comprises a demultiplexing element 40 and a decoder 42 for outputting IP data. The demultiplexing element 40 is able to extract information relative the reception instant of a next burst of data from a burst of data being demodulated. This point of the invention will be further explained later.

Before outputting any useful data, each functional module 16A...16G needs to be synchronised with the signal it receives. Synchronization of a functional module 16A...16b means synchronization of its processing elements. The synchronization duration thus depends on the number of processing elements needed to achieve the function of the functional module 16A... 16G, and therefore depends on the reception quality.

In order to determine the synchronization duration of the functional modules 16A... 16G, the power management module 18 comprises an analyzing module 44 and a synchronization duration determination element 46.

The synchronization duration element 46 is able to provide the synchronization duration of every functional module 16A...16G. The synchronization durations are referenced as SD1, SD2, SD3, SD4, SD5, SD6 and SD7.

Some synchronization durations are predetermined and stored in a database 48. They correspond to the maximum synchronization duration, i.e. to the worse possible reception.

The predetermined synchronization durations are SD1, SD2, SD3 and SD6. They preferably correspond to functional modules whose synchronization duration does not vary a lot relative to reception condition.

The other synchronization durations, namely SD4 and SD5, are adapted to the actual reception conditions.

In order to adapt synchronization durations SD4 and SD5, the analysing module 44 comprises a Doppler effect calculation element 44A and a Viterbi pseudosyndrome calculation element 44B.

The Doppler effect estimation element 44A is based on deformation measurements measured in time and frequency interpolation filters of the frequency channel estimation unit 32.

The Viterbi pseudosyndrome calculation element gives information on the quality of the bit sequence outputted by the Viterbi decoder 36. It may be designed as explained in the article "Pseudo-synchrome method for supervising Viterbi decoders at any coding rate" by C. Berron and C. Douillard, published in Electronics letters, 23rd June 1994, Vol.30, No.13.

The synchronization duration determination element 46 is connected to the analyzing module 44 and to the database 48. The determination is achieved by comparing the calculations provided by the analysing module 44 to predetermined thresholds memorised in the database 48.

The Doppler effect calculation gives the synchronization duration SD4, while the Viterbi syndrome calculation gives the synchronization duration SD5.

Moreover, the synchronization duration determination element 46 is configured to determine the total synchronization duration SD of the entire demodulating unit 12. The total synchronization duration SD is deduced from the time length between the activation of the first processing element along the data path and the outputting of demodulated data at the output of the demodulating unit 12. The total synchronization duration SD is deduced from at least one previously received burst of data B. Preferably, it corresponds to the average of the time lengths determined for a given number of previously received bursts of data.

Consequently, the synchronization duration determination element 46 delivers estimated synchronization durations at different locations along the data path.

The processing elements 16 are adapted to be activated and deactivated separately from one another. The power management module 18 comprises an activation/deactivation module 50 adapted to activate or deactivate each processing element 16 individually, according to the synchronization durations determined by the synchronization duration determination element 46.

The activation or deactivation of a processing element relies on the control of its power supply, the processing element being active when supplied with power and inactive when not. Alternatively, it may be based on the supply of a clock signal. In this last case, the processing element is active when supplied with a clock signal and inactive when the clock signal is not supplied or is constant.

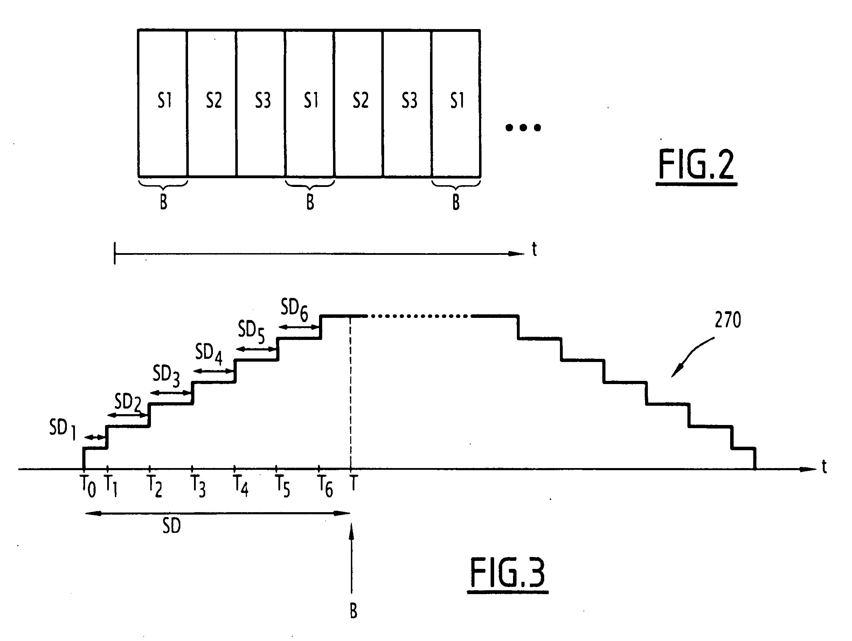

Referring now to figure 2, a part of a DVB-H signal is illustrated.

The DVB-H signal part carries several services noted S1...S3. For example, each service corresponds to a TV channel.

The transmission is "time-sliced". This means that each service S1...S3 uses a part of the available bandwidth during a predetermined time slot. When the receiver 10 is set to receive a particular service, for example the first service S1, useful data is received as consecutive bursts of data B, each corresponding to a time slot attributed to S1. The signal between two bursts of data is called off-time signal and carries the other services data.

The data of each burst B includes the off-time duration between two bursts of data.

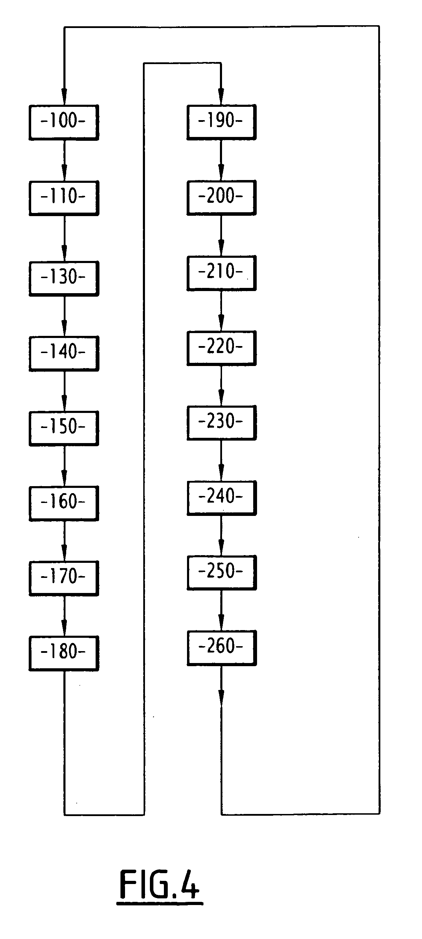

Referring now to figures 3 and 4, the operation of the receiver 10 of figure 1 when receiving the DVB-H signal of figure 2 is described.

The operation is based on the fact that when a burst of data B is received, all the processing elements forming the data path must be active and synchronized. It is also based on the fact that a given processing element is able to synchronize only when the previous processing element in the data path is itself synchronized.

Consequently, when the receiver 10 is first powered-up and set to receive the first service S1, the demodulating unit 12 is entirely, or most entirely, active in order to receive and demodulate a first burst of data B. Once the burst of data is received, the receiver 10 is switch to an idle state, i.e. the demodulating unit 12 is deactivated.

The following steps are then achieved for each subsequent burst of data B.

The method comprises a step 100 of determining a time T at which a next burst of data B corresponding to the first service S1 is expected to be received by the antenna 14. This determination is achieved by using the data of the previously received burst of data B.

During a step 110, the first functional module 16A along the data path is activated, i.e. its processing elements are activated, at a time T0 corresponding to the expected reception instant less the total synchronization duration SD.

The first functional module 16A then synchronizes with the off-time signal received from the antenna 14.

During a step 130, the second functional module 14B is activated at a time T1 corresponding to the time T0 of the activation of the first functional module 16A plus the predetermined synchronization duration SD1. It then synchronizes with off-time signal received from the first functional module 16A.

Similarly, the third functional module 16C is activated at time T plus SD and SD2 during a step 140 and synchronizes.

During a step 150, the processing elements of the frequency channel estimation module 16D that must be activated are deduced from the Doppler calculation realized by the analysing module 44 on at least one previously received burst of data. Also from the Doppler calculation, the synchronisation duration SD4 is determined.

The step 150 is followed by a step 160 during which the frequency channel estimation module 16B, is activated at a time T0 plus SD1, SD2 and SD3. During a step 170 it synchronizes with the off-time signal received from the previous module 16C.

The step 170 is followed by a step 180 during which the first decoder module 16E is activated at a time corresponding to the time T0 plus the synchronization durations SD1, SD2, SD3 and SD4.

The processing elements PE that must be activated in the first decoder module 16E are deduced from the Viterbi pseudo-syndrome calculation realized by the analysing module 44 on at least one previously received burst of data. Also from the Viterbi pseudo-syndrome calculation, the synchronization duration SD5 is determined.

The step 180 is followed by a step 190 during which the first decoder module 16E synchronizes with the off-time signals received from the previous module 16D and 16C.

During a step 200, the second decoder module 16F is activated at a time corresponding to the time T0 plus the synchronization durations SD1, SD2, SD3, SD4 and SD5 of the previous modules.

The step 200 is followed by a step 240 during which the second decoder module 16F synchronizes with the off-time signal received from the first decoder module 16E.

Similarly, during steps 220 and 240, the last functional module 16G is activated at time T0 plus the synchronization durations of the previous functional modules and synchronizes with the data it receives.

The method goes on with a step 250 during which the expected burst of data B is received at reception time T. At the time of reception T, all the functional modules 16A...16G are expected to be activated and synchronised so as to correctly demodulate the burst of data B.

During a step 260, the output of each functional module 16A...16G is scanned by the analysis module 44 in order to determine if some of the functional modules are finished with the processing of the burst of data B. If it is the case, they are deactivated by the activation/deactivation module 50, i.e. their processing elements are deactivated. This is referenced as 270 on figure 3.

Once demodulation is done, the receiver is again in an idle state and the method goes back to step 100.

Many other additional embodiments are possible. For example, the method of the invention may be executed by a processor program having a sequence of instructions stored on a processor readable medium to cause the processor to activate processing elements modules of a demodulating unit separately and dynamically based on the received signal.

This processor program can be integrated in any kind of processing unit as for example, computers, laptops, mobile phones, television decoders, television sets and the like.

## Claims

1. Device for receiving a radio frequency signal comprising consecutive bursts of data (B), said device comprising:
- a demodulating unit (12) comprising a plurality of processing elements (16) forming a data path for demodulating said radio frequency signal,
- a power management module (18) for activating said processing elements (16) before the reception of a burst of data (B), the power management module (18) being adapted to successively activate the processing elements (16) starting from an activation time (T0), and the power management module (18), for activating a processing element:
- comprising a synchronization duration determination module (46) for determining a synchronization duration of the processing elements (16) along the data path which precede said processing element to be activated, and
- being adapted for activating said processing element to be activated at a time corresponding to the activation time (T0) plus the synchronization duration,
**characterized in that** the power management module (18) comprises an analysing module (44) for determining a reception quality parameter of said signal, and the synchronization duration determination module (46) is adapted for deducing the synchronization duration from said reception quality parameter.

2. Device according to claim 1, **characterized in that** the reception quality parameter is a Doppler effect.

3. Device according to claim 1, **characterised in that** the reception quality parameter is a Viterbi syndrome.

4. Device according to any of the claims 1 to 3, **characterized in that**:
- the power management module (18) is adapted for determining a total synchronization duration (SD) for said demodulating unit (12),
- the power management module (13) is adapted for determining an expected reception time (T) of said burst of data, and
- said activation time (T0) corresponds to said reception time (T) of said burst of data less said total synchronization duration.

5. Power management method for a receiver adapted to receive a radio frequency signal comprising consecutive bursts of data (B), said receiver comprising a demodulating unit (12) comprising a plurality of processing elements (16) forming a data path for demodulating said radio frequency signal, said method comprising activating said processing elements (16) before the reception of a burst of data (B), the processing elements (16) being successively activated along the data path starting from an activation time (T0), and comprising for activating a processing element:
- determining a synchronization duration of the processing elements along the data path which precede said processing element to be activated, and
- activating said processing element to be activated at a time corresponding to the activation time (T0) plus the synchronization duration,
**characterized in that** it comprises:
- determining a reception quality parameter of said signal, and
- deducing the synchronization duration from said reception quality parameter.

6. Method according to claim 5, **characterized in that** the reception quality parameter is a Doppler effect.

7. Method according to claim 5, **characterized in that** the reception quality parameter is a Viterbi syndrome.

8. Method according to any of the claims 5 to 7, **characterized in that** it comprises:
- determining a reception time (T) of said burst of data,
- determining a total synchronization duration (SD) for said demodulating unit,
wherein said activation time (T0) corresponds to said reception time (T) of said burst of data less said total synchronization duration (SD).

9. Method according to claim 8, **characterized in that** said total synchronization duration corresponds to the time length between said activation time (T0) and the outputting of demodulated data from the demodulating unit for a previously received burst of data.

10. Method according to claim 8, **characterized in that** said total synchronization duration corresponds to the average time length between said activation time (T0) and the outputting of demodulated data from the demodulating unit for a predetermined number of previously received bursts of data.

11. Processor program having a sequence of instructions that, when executed by a processor, causes the processor to achieve a method according to any of the claims 5 to 10.

## Patentansprüche

1. Vorrichtung zum Empfangen eines Radiofrequenzsignals mit aufeinanderfolgenden Datenbündeln, die Vorrichtung umfassend:
- eine Demodulationseinheit (12) mit mehreren Verarbeitungselementen (16), die einen Datenpfad für das Demodulieren des Radiofrequenzsignals bilden;
- ein Leistungsverwaltungsmodul (18) zum Aktivieren der Verarbeitungselemente (16) vor dem Empfangen eines Datenbündels (B),
wobei das Leistungsverwaltungsmodul (18) ausgelegt ist, um die Verarbeitungselemente (16) beginnend von einer Aktivierungszeit (T0) aus nacheinander zu aktivieren, und
wobei das Leistungsverwaltungsmodul (18) zum Aktivieren eines Verarbeitungselements (16) enthält:
- ein Synchronisationsdauer-Bestimmungsmodul (46) zum Bestimmen einer Synchronisationsdauer der Verarbeitungselemente (16) entlang des Datenpfads, die dem zu aktivierenden Verarbeitungselement vorangehen, und
- für das Aktivieren des zu aktivierenden Verarbeitungselements zu einem Zeitpunkt ausgelegt ist, der der Summe aus der Aktivierungszeit (T0) und der Synchronisationsdauer entspricht,
**dadurch gekennzeichnet, dass**
das Leistungsverwaltungsmodul (18) ein Analysemodul (44) für das Bestimmen eines Empfangsqualitätsparameters umfasst, und das Synchronisationsdauer-Bestimmungsmodul (46) für das Ableiten der Synchronisationsdauer aus dem Empfangsqualitätsparameter ausgelegt ist.

2. Vorrichtung nach Anspruch 1, wobei der Empfangsqualitätsparameter ein DopplerEffekt ist.

3. Vorrichtung nach Anspruch 1, wobei der Empfangsqualitätsparameter ein Viterbi-Syndrom ist.

4. Vorrichtung nach einem der Ansprüche 1 bis 3, wobei
- das Leistungsverwaltungsmodul (18) für das Bestimmen einer gesamten Synchronisationsdauer (SD) für die Demodulationseinheit (12) ausgelegt ist;
- das Leistungsverwaltungsmodul (18) für das Bestimmen einer erwarteten Empfangszeit (T) des Datenbündels ausgelegt ist; und
- die Aktivierungszeit (T0) der Empfangszeit (T) des Datenbündels abzüglich der gesamten Synchronisationsdauer entspricht.

5. Leistungsverwaltungsverfahren für einen Empfänger, der zum Empfangen eines Radiofrequenzsignals mit mehreren Datenbündeln (B) ausgelegt ist, wobei der Empfänger eine Demodulationseinheit (12) mit mehreren Verarbeitungselementen (16) umfasst, die einen Datenpfad für das Demodulieren des Radiofrequenzsignals bilden, wobei das Verfahren umfasst das Aktivieren der Verarbeitungselemente (16) vor dem Empfangen eines Datenbündels (B), wobei die Verarbeitungselemente (16) beginnend von einer Aktivierungszeit (T0) aus entlang dem Datenpfad nacheinander aktiviert werden, wobei das Verfahren für das Aktivieren eines Verarbeitungselements umfasst:
- Bestimmen einer Synchronisationsdauer der Verarbeitungselemente entlang des Datenpfads, die dem zu aktivierenden Element vorangehen; und
- Aktivieren des zu aktivierenden Verarbeitungselements zu einem Zeitpunkt, der der Summe aus der Aktivierungszeit (T0) und der Synchronisationsdauer entspricht, **dadurch gekennzeichnet, dass**
das Verfahren das Bestimmen eines Empfangsqualitätsparameters des Signals und das Ableiten der Synchronisationsdauer aus dem Empfangsqualitätsparameters umfasst.

6. Verfahren nach Anspruch 5, wobei der Empfangsqualitätsparameter ein DopplerEffekt ist.

7. Verfahren nach Anspruch 5, wobei der Empfangsqualitätsparameter ein Viterbi-Syndrom ist.

8. Verfahren nach einem der Ansprüche 5 bis 7, weiter umfassend:
- Bestimmen einer Empfangszeit (T) des Datenbündels; und
- Bestimmen einer gesamten Synchronisationsdauer (SD) für die Demodutationseinheit, wobei die Aktivierungszeit (T0) der Empfangszeit (T) des Datenbündels abzüglich der gesamten Synchronisationsdauer (SD) entspricht.

9. Verfahren nach Anspruch 8, wobei die gesamte Synchronisationsdauer dem Zeitabstand zwischen der Aktivierungszeit (T0) und dem Ausgeben der demodulierten Daten von der Demodulationseinheit für ein zuvor empfangenes Datenbündel entspricht.

10. Verfahren nach Anspruch 8, wobei die gesamte Synchronisationsdauer dem mittleren Zeitabstand zwischen der Aktivierungszeit (T0) und dem Ausgeben der demodulierten Daten von der Demodulationseinheit für eine vorbestimmte Anzahl von zu vor empfangenen Datenbündeln entspricht.

11. Prozessorprogramm mit einer Befehlsfolge, die, wenn sie von einem Prozessor abgearbeitet wird, den Prozessor veranlasst, ein Verfahren nach den Ansprüchen 5 bis 10 auszuführen.

## Revendications

1. Dispositif de réception d'un signal radiofréquence comprenant les rafales de données (B) consécutives, ledit dispositif comprenant :
- une unité de démodulation (12) comprenant une pluralité d'éléments de traitement (16) formant un chemin de données pour démoduler ledit signal radiofréquence,
- un module de gestion de la consommation (18) pour activer lesdits éléments de traitement (16) avant la réception d'une rafale de données (B), le module de gestion de la consommation (18) étant adapté pour activer de manière successive les éléments de traitement (16) à partir d'un temps d'activation (T0), et le module de gestion de la consommation (18), pour l'activation d'un élément de traitement :
- comprenant un module de détermination d'une durée de synchronisation (46) pour déterminer une durée de synchronisation des éléments de traitement (16) le long du chemin de données avant l'activation dudit élément de traitement, et
- étant adapté pour activer ledit élément de traitement à activer à un temps qui correspond au temps d'activation (T0) augmenté de la durée de synchronisation,
**caractérisé en ce que** le module de gestion de la consommation (18) comprend un module d'analyse (44) pour déterminer un paramètre de qualité de réception dudit signal, et le module de détermination de la durée de synchronisation (46) est adapté pour déduire la durée de synchronisation dans ledit paramètre de qualité de réception.

2. Dispositif selon la revendication 1, **caractérisé en ce que** le paramètre de qualité de réception est un effet Doppler.

3. Dispositif selon la revendication 1, **caractérisé en ce que** le paramètre de qualité de réception est un syndrome de Viterbi.

4. Dispositif selon l'une quelconque des revendications 1 à 3, **caractérisé en ce que** :
- le module de gestion de la consommation (18) est adapté pour déterminer une durée totale de synchronisation (SD) pour ladite unité de démodulation (12),
- le module de gestion de la consommation (18) est adapté pour déterminer un temps de réception prévu (T) de ladite rafale de données, et
- ledit moment d'activation (T0) correspond audit temps de réception (T) de ladite rafale de données diminué de la durée totale de synchronisation.

5. Procédé de gestion de la consommation pour un récepteur adapté pour recevoir un signal radiofréquence comprenant des rafales de données (B) consécutives, ledit récepteur comprenant une unité de démodulation (12) comprenant une pluralité d'éléments de traitement (16) formant un chemin de données pour ledit signal radiofréquence de démodulation, ledit procédé comprenant une activation desdits éléments de traitement (16) avant la réception d'une rafale de données (B), les éléments de traitement (16) étant activés de manière successive le long du chemin de données à partir d'un temps d'activation (T0), et comprenant, pour l'activation d'un élément de traitement :
- une détermination d'une durée de synchronisation des éléments de traitement le long du chemin de données avant l'activation dudit élément de traitement, et
- une activation dudit élément de traitement à activer à un temps correspondant au temps d'activation (T0) augmenté de la durée de synchronisation, **caractérisé en ce qu'**il comprend :
- une détermination d'un paramètre de qualité de réception dudit signal, et
- une déduction de la durée de synchronisation, effectuée dans ledit paramètre de qualité de réception.

6. Procédé selon la revendication 5, **caractérisé en ce que** le paramètre de qualité de réception est un effet Doppler.

7. Procédé selon la revendication 5, **caractérisé en ce que** le paramètre de qualité de réception est un syndrome de Viterbi.

8. Procédé selon l'une quelconque des revendications 5 à 7, **caractérisé en ce qu'**il comprend :
- une détermination d'un temps de réception (T) de ladite rafale de données,
- une détermination d'une durée totale de synchronisation (SD) pour ladite unité de démodulation,
ledit temps d'activation (T0) correspondant audit temps de réception (T) de ladite rafale de données diminué de ladite durée totale de synchronisation (SD).

9. Procédé selon la revendication 8, **caractérisé en ce que** ladite durée totale de synchronisation correspond à la longueur de temps entre ledit temps d'activation (T0) et l'émission des données démodulées à partir de l'unité de démodulation pour une rafale de données précédemment reçue.

10. Procédé selon la revendication 8, **caractérisé en ce que** ladite durée totale de synchronisation correspond à la longueur de temps moyenne entre ledit temps d'activation (T0) et l'émission des données démodulées à partir de l'unité de démodulation pour un nombre prédéterminé de rafales de données précédemment reçues.

11. Programme de processeur présentant une séquence d'instructions qui, lorsqu'elles sont exécutées par un processeur, amènent le processeur à mettre en oeuvre un procédé selon l'une quelconque des revendications 5 à 10.
